# EUROPEAN PATENT APPLICATION

(11) **EP 4 707 983 A1**
(43) Date of publication of application: **11.03.2026**
(21) Application number: 25199306.9
(22) Date of filing: 01.09.2025
(51) Int. Cl.: G05D 1/243, G05D 1/244, G05D 1/646, G05D 105/22, G05D 107/13, G05D 109/10, G05D 111/10, B60W 30/00

(54) **MOBILE OBJECT CONTROL DEVICE, MOBILE OBJECT CONTROL METHOD, AND PROGRAM**

(30) Priority: 06.09.2024 JP 2024153772
(71) Applicant: HONDA MOTOR CO., LTD., Tokyo 105-8404 (JP)
(72) Inventor: YASUI, Yuji, Saitama, 351-0193 (JP)
(74) Representative: Kiwit, Benedikt

(57) **Abstract**

A mobile object control device (1) includes a recognizer (16) configured to recognize an object which is present near a mobile object using at least a camera (10) and a driving controller (100) configured to perform automated driving for autonomously controlling at least one of a speed and steering of the mobile object on the basis of the recognized object. The recognizer (16) recognizes a two-dimensional or three-dimensional marker and a boundary of a track along which the mobile object moves. The driving controller (100) switches the automated driving to be performed between first automated driving which is the automated driving based on the marker and second automated driving which is the automated driving based on the boundary.

## Description

### BACKGROUND

### Field of the Invention

The present invention relates to a mobile object control device, a mobile object control method, and a program.

### Description of Related Art

Automated traveling of a vehicle includes two types of modes. For example, a first automated traveling mode is a mode in which a track is recognized on the basis of an image captured by an external camera and a vehicle is caused to travel autonomously along the recognized track. A second automated traveling mode is a mode in which a vehicle is caused to travel autonomously on the basis of map information which is prepared in advance. When a track cannot be recognized using the external camera, the traveling mode is switched to automated traveling using map information (for example, see Japanese Patent No. 7347503).

### SUMMARY

However, in the related art, a situation in which a traveling lane cannot be recognized using an external camera may occur due to various reasons such as the weather, thin white lines (road marking lines), and lack in ambient brightness or may occur according to conditions such as a plurality of traveling routes and road marking lines (road paints) indicating that.

In the latter, a track changes greatly at left and right turns and a U-turn at crossings or junctions. In a place in which a vehicle needs to move greatly in a left or right turn direction or a rotating direction, road marking lines may be drawn, and thus a track may not be able to be recognized using an external camera.

In the related art, matching between a map and a position of a host vehicle is performed before the host vehicle enters an area in which a track cannot be recognized, and a trajectory of the host vehicle is controlled on the basis of information of a traveling route shown in a map having been matched in advance and an estimated amount of movement of the host vehicle after the host vehicle has entered the area in which a track cannot be recognized. **In** this technique, in an area in which the latter conditions are likely to occur and an amount of movement in the left and right turn directions or the rotating direction is large, an estimated position of the host vehicle may depart greatly from an actual position due to nonlinear characteristics (slip) of rolling of tires and thus the vehicle may depart from the track.

An aspect of the present invention was made in consideration of the aforementioned circumstances, and an objective thereof is to provide a mobile object control device, a mobile object control method, and a program that can perform automated traveling without departing from a target track even in a situation in which a mobile object such as a vehicle has to move greatly in a left or right turn direction or a rotating direction in an area in which the track is less likely to be recognized.

A mobile object control device, a mobile object control method, and a program according to the present embodiment employ the following configurations.

A first example of the present invention is a mobile object control device including a recognizer configured to recognize an object which is present near a mobile object using at least a camera and a driving controller configured to perform automated driving for autonomously controlling at least one of a speed and steering of the mobile object on the basis of the recognized object, wherein the recognizer recognizes a two-dimensional or three-dimensional marker and a boundary of a track along which the mobile object moves, and the driving controller switches the automated driving to be performed between first automated driving which is the automated driving based on the marker and second automated driving which is the automated driving based on the boundary.

A second example of the present invention is the mobile object control device according to the first example, wherein the driving controller switches the automated driving to the first automated driving when the marker is recognized and switches the automated driving to the second automated driving when the marker is not recognized or when the marker is recognized again after having switching the automated driving to the first automated driving.

A third example of the present invention is the mobile object control device according to the first or second example, wherein the recognizer recognizes a first marker and a second marker other than the first marker, and the driving controller switches the automated driving to be performed between the first automated driving based on the first marker and the first automated driving based on the second marker.

A fourth example of the present invention is the mobile object control device according to the third example, further including a generator configured to generate a target trajectory along which the mobile object is to travel on the basis of the marker, wherein the generator generates a first target trajectory which is the target trajectory at the time of traveling along a first route on the basis of a result of comparison between the recognized first marker and the first marker included in map information when a route to a destination is the first route, the generator generates a second target trajectory which is the target trajectory at the time of traveling along a second route on the basis of a result of comparison between the recognized second marker and the second marker included in the map information when the route to the destination is the second route, the driving controller causes the mobile object to travel along the first route by performing the first automated driving on the basis of the first target trajectory, and the driving controller causes the mobile object to travel along the second route by performing the first automated driving on the basis of the second target trajectory.

A fifth example of the present invention is the mobile object control device according to the fourth example, wherein the first marker and the second marker are installed in a predetermined area in which the first route and the second route are present together.

A sixth example of the present invention is the mobile object control device according to the fifth example, wherein a third marker which is shared by both the first target trajectory and the second target trajectory are additionally installed in the predetermined area, the generator generates the first target trajectory on the basis of a result of comparison between the recognized first marker and the recognized third marker and the first marker and the third marker included in the map information when a route to a destination is the first route, and the generator generates the second target trajectory on the basis of a result of comparison between the recognized second marker and the recognized third marker and the second marker and the third marker included in the map information when the route to the destination is the second route.

A seventh example of the present invention is the mobile object control device according to the fifth or sixth example, wherein a fourth marker which is the two-dimensional or three-dimensional marker is installed in an entrance of the predetermined area, the recognizer additionally recognizes the fourth marker, and the generator starts generating the first target trajectory or the second target trajectory when the fourth marker is recognized.

An eighth example of the present invention is the mobile object control device according to the seventh example, wherein the fourth marker is installed in an exit of the predetermined area, the recognizer recognizes the boundary of the track in front of a position at which the fourth marker has been recognized again when the fourth marker has been recognized again, the generator generates a third target trajectory which is the target trajectory at the time of traveling along the track on the basis of the recognized boundary, and the driving controller causes the mobile object to travel along the track by performing the second automated driving on the basis of the third target trajectory.

A ninth example of the present invention is the mobile object control device according to the eighth example, wherein the generator generates a fourth target trajectory for decelerating and stopping the mobile object when the boundary of the track is not recognized in front of the position at which the fourth marker has been recognized again, and the driving controller stops the mobile object by automatically controlling at least one of the speed and the steering of the mobile object on the basis of the fourth target trajectory.

A tenth example of the present invention is the mobile object control device according to any one of the third to ninth example, wherein at least one of the first marker and the second marker is painted on a road surface using an optical illusion as the two-dimensional marker on the road surface.

An eleventh example of the present invention is a mobile object control method using a computer mounted in a mobile object in which at least a camera is installed, the mobile object control method including: recognizing an object which is present near a mobile object using the camera; performing automated driving for autonomously controlling at least one of a speed and steering of the mobile object on the basis of the recognized object; recognizing a two-dimensional or three-dimensional marker and a boundary of a track along which the mobile object moves; and switching the automated driving to be performed between first automated driving which is the automated driving based on the marker and second automated driving which is the automated driving based on the boundary.

A twelfth example of the present invention is a program for causing computer mounted in a mobile object in which at least a camera is installed to perform: recognizing an object which is present near a mobile object using the camera; performing automated driving for autonomously controlling at least one of a speed and steering of the mobile object on the basis of the recognized object; recognizing a two-dimensional or three-dimensional marker and a boundary of a track along which the mobile object moves; and switching the automated driving to be performed between first automated driving which is the automated driving based on the marker and second automated driving which is the automated driving based on the boundary.

According to the aforementioned examples, it is possible to perform automated traveling without departing from a target track even in a situation in which a mobile object such as a vehicle has to move greatly in a left or right turn direction or a rotating direction in an area in which the track is less likely to be recognized.

### BRIEF DESCRIPTION OF THE DRAWINGS

FIG. 1 is a diagram illustrating a configuration of a mobile object control system using an automated driving control device according to an embodiment.
FIG. 2 is a diagram illustrating an example of a predetermined area.
FIG. 3 is a diagram illustrating an example of a predetermined area.
FIG. 4 is a diagram illustrating an example of markers which are installed in a map-matching area.
FIG. 5 is a diagram illustrating an example of a route A-only marker.
FIG. 6 is a diagram illustrating an example of an image of a front view of a host vehicle captured by a camera.
FIG. 7 is a diagram illustrating another example of the route A-only marker.
FIG. 8 is a flowchart illustrating an example of a flow of a series of processes which is performed by the automated driving control device according to the embodiment.

### DETAILED DESCRIPTION

Hereinafter, a mobile object control device, a mobile object control method, and a program according to an embodiment of the present invention will be described with reference to the accompanying drawings. The mobile object control device according to the embodiment is applied to, for example, an automated driving vehicle. Automated driving is, for example, to perform driving control of a vehicle by controlling one or both of a speed and steering of the vehicle. The driving control of the vehicle includes, for example, various types of driving control such as an adaptive cruise control system (ACC), traffic jam pilot (TJP), auto lane changing (ALC), a collision mitigation brake system (CMBS), or a lane keeping assistance system (LKAS). Driving of an automated driving vehicle may be controlled through manual driving by an occupant (a driver).

### [Entire configuration]

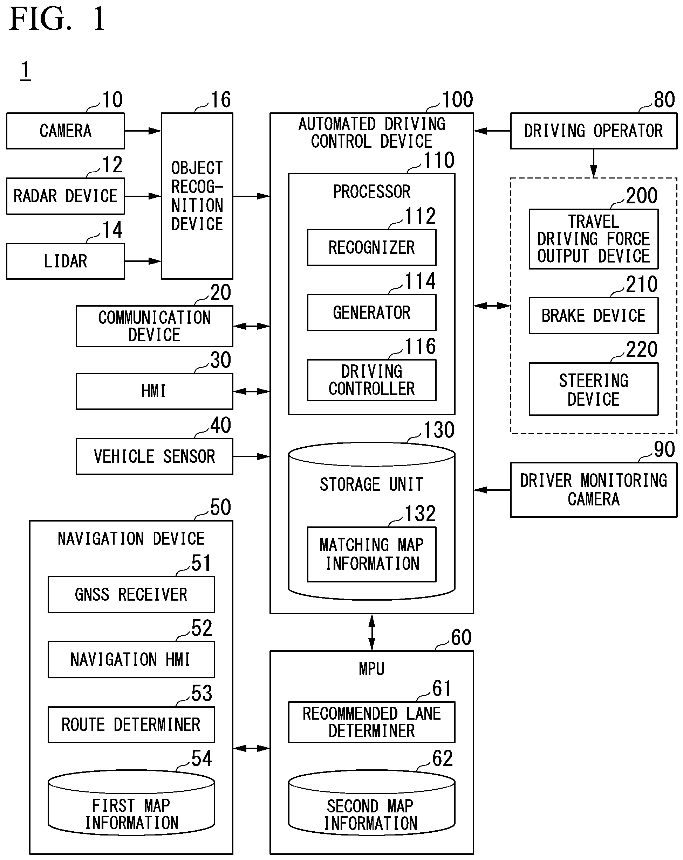

FIG. 1 is a diagram illustrating a configuration of a mobile object control system 1 employing an automated driving control device 100 according to an embodiment. A mobile object in which the mobile object control system 1 is mounted is typically an automobile.

An automobile is, for example, a vehicle with two wheels, three wheels, or four wheels, and a drive source thereof is an internal combustion engine such as a diesel engine or a gasoline engine, an electric motor, or a combination thereof. The electric motor operates using electric power generated by a power generator connected to the internal combustion engine or using electric power discharged from a secondary battery or a fuel cell.

The mobile object in which the mobile object control system 1 is mounted is not limited to an automobile and may be, for example, a general vehicle-type mobile object traveling with an electric motor which is driven using electric power supplied from a battery such as an electrically assisted bicycle. The mobile object in which the mobile object control system 1 is mounted is not limited to a vehicle-type mobile object and may be other electric mobility such as a mobile robot. In the following description, it is assumed that the mobile object in which the mobile object control system 1 is mounted is an automobile with four wheels, and the automobile in which the mobile object control system 1 is mounted is referred to as a "host vehicle M."

The mobile object control system 1 includes, for example, a camera 10, a radar device 12, a Light Detection and Ranging (LIDAR) device 14, an object recognition device 16, a communication device 20, a human-machine interface (HMI) 30, a vehicle sensor 40, a navigation device 50, a map positioning unit (MPU) 60, a driving operator 80, a driver monitoring camera 90, an automated driving control device 100, a travel driving force output device 200, a brake device 210, and a steering device 220. These devices or instruments are connected to each other via a multiplex communication line such as a controller area network (CAN) communication line, a serial communication line, a radio communication network, or the like. The configuration illustrated in FIG. 1 is only an example, and a part of the configuration may be omitted or another configuration may be added thereto. The automated driving control device 100 is an example of a "mobile object control device."

The camera 10 is, for example, a digital camera using a solid-state imaging device such as a charge coupled device (CCD) or a complementary metal oxide semiconductor (CMOS). The camera 10 is attached to an arbitrary position on the host vehicle M. For example, when a front view of the host vehicle M is imaged, the camera 10 is attached to an upper part of a front windshield, a rear surface of a rearview mirror, or the like. When a rear view of the host vehicle M is imaged, the camera 10 is attached to an upper part of a rear windshield or the like. When a right view or a left view of the host vehicle M is imaged, the camera 10 is attached to a right surface or a left surface of a door mirror or a vehicle body or the like. The camera 10 images the surroundings of the host vehicle M, for example, periodically and repeatedly. The camera 10 may be a stereoscopic camera.

The radar device 12 detects at least a position (a distance and a direction) of an object by radiating radio waves such as millimeter waves to the surroundings of the host vehicle M and detecting radio waves (reflected waves) reflected by the object. The radar device 12 is attached to an arbitrary position on the host vehicle M. The radar device 12 may detect a position and a speed of an object using a frequency modulated continuous wave (FM-CW) method.

The LIDAR 14 radiates light to the surroundings of the host vehicle M and measures scattered light of the radiated light. The LIDAR 14 detects a distance to an object on the basis of a time period from radiation of light to reception of light. The radiated light may be, for example, a pulse-like laser beam. The LIDAR 14 is attached to an arbitrary position on the host vehicle M.

The object recognition device 16 performs a sensor fusion process on results of detection from some or all of the camera 10, the radar device 12, and the LIDAR 14 and recognizes a position, a type, a speed, and the like of an object. The object recognition device 16 outputs the result of recognition to the automated driving control device 100. The object recognition device 16 may output the results of detection from the camera 10, the radar device 12, and the LIDAR 14 to the automated driving control device 100 without any change. In this case, the object recognition device 16 may be omitted from the mobile object control system 1.

The communication device 20 communicates with other vehicles near the host vehicle M, for example, using a cellular network, a Wi-Fi network, Bluetooth (registered trademark), or dedicated short range communication (DSRC) or communicates with various server devices via radio base stations.

The HMI 30 presents various types of information to an occupant (who includes a driver) of the host vehicle M and receives an input operation from the occupant. The HMI 30 includes, for example, a display, a speaker, a buzzer, a touch panel, a microphone, switches, and keys.

The vehicle sensor 40 includes a vehicle speed sensor that detects a speed of the host vehicle M, an acceleration sensor that detects an acceleration, a yaw rate sensor that detects an angular velocity around a vertical axis, and a direction sensor that detects a direction of the host vehicle M.

The navigation device 50 includes, for example, a global navigation satellite system (GNSS) receiver 51, a navigation HMI 52, and a route determiner 53. The navigation device 50 stores first map information 54 in a storage device such as a hard disk drive (HDD) or a flash memory.

The GNSS receiver 51 identifies a position of the host vehicle M on the basis of signals received from GNSS satellites. The position of the host vehicle M may be identified or complemented by an inertial navigation system (INS) using the output of the vehicle sensor 40.

The navigation HMI 52 includes a display device, a speaker, a touch panel, and keys. The navigation HMI 52 may be partially or wholly shared by the HMI 30. For example, an occupant may input a destination of the host vehicle M to the navigation HMI 52 instead of or in addition to inputting the destination of the host vehicle M to the HMI 30.

For example, the route determiner 53 determines a route (hereinafter referred to as a route on a map) from the position of the host vehicle M identified by the GNSS receiver 51 (or an input arbitrary position) to a destination input by an occupant using the HMI 30 or the navigation HMI 52 with reference to the first map information 54.

The first map information 54 is, for example, information in which a road shape is expressed by links indicating a road and nodes connected by the links. The first map information 54 may include a curvature of a road and point of interest (POI) information. The route on a map is output to the MPU 60.

The navigation device 50 may perform route guidance using the navigation HMI 52 on the basis of the route on a map. The navigation device 50 may be realized, for example, by a function of a terminal device such as a smartphone or a tablet terminal which is carried by an occupant. The navigation device 50 may transmit a current position and a destination to a navigation server via the communication device 20 and acquire a route which is equivalent to the route on a map from the navigation server.

The MPU 60 includes, for example, a recommended lane determiner 61 and stores second map information 62 in a storage device such as an HDD or a flash memory. The recommended lane determiner 61 divides a route on a map provided from the navigation device 50 into a plurality of blocks (for example, every 100 [m] in a vehicle traveling direction) and determines a recommended lane for each block with reference to the second map information 62. The recommended lane determiner 61 determines in which lane from the leftmost the host vehicle is to travel. For example, when there is a branching point in the route on a map, the recommended lane determiner 61 determines the recommended lane such that the host vehicle M can travel along a rational route for traveling to a branching destination.

The second map information 62 is map information with higher precision than the first map information 54. For example, the second map information 62 may include information of centers of lanes and information of boundaries of lanes. The second map information 62 may include road information, traffic regulation information, address information (addresses and postal codes), facility information, and phone number information. The second map information 62 may be updated from time to time by causing the communication device 20 to communicate with another device.

The driving operator 80 includes, for example, an accelerator pedal, a brake pedal, a shift lever, a steering wheel, a deformed steering wheel, a joystick, and other operators. A sensor that detects an amount of operation or whether an operation has been performed is attached to the driving operator 80. Results of detection of the sensor are output to the automated driving control device 100 or output to some or all of the travel driving force output device 200, the brake device 210, and the steering device 220.

For example, a sensor attached to the steering wheel (hereinafter referred to as a steering sensor) detects a minute current which is generated when an occupant comes into contact with the steering wheel. The steering sensor may detect a steering torque which is generated around a rotation shaft (shaft) of the steering wheel. When the current or the steering torque is detected, the steering sensor outputs a signal indicating the result of detection to the automated driving control device 100.

The driver monitoring camera 90 is a camera that images a cabin of the host vehicle M. The driver monitoring camera 90 is, for example, a digital camera using a solid-state imaging device such as a CCD or a CMOS. When the cabin of the host vehicle M is imaged, the driver monitoring camera 90 outputs image data to the automated driving control device 100.

The automated driving control device 100 includes, for example, a processor 110 and a storage unit 130. The processor 110 includes, for example, a recognizer 112, a generator 114, and a driving controller 116. The constituents of the processor 110 are realized, for example, by causing a hardware processor such as a central processing unit (CPU) or a graphics processing unit (GPU) to execute a program (software). Some or all of these constituents may be realized by hardware (a circuit part including circuitry) such as a large scale integration (LSI) circuit, an application-specific integrated circuit (ASIC), a field-programmable gate array (FPGA), or a system on chip (SOC) or may be cooperatively realized by software and hardware. The program may be stored in a storage device (a storage device including a non-transitory storage medium) such as an HDD or a flash memory of the automated driving control device 100 in advance, or may be stored in a removable storage medium such as a DVD or a CD-ROM and installed in the HDD or the flash memory of the automated driving control device 100 by setting the storage medium (a non-transitory storage medium) into a drive device.

The storage unit 130 is realized by the aforementioned various storage devices. The storage unit 130 is realized, for example, by an HDD, a flash memory, an electrically erasable programmable read only memory (EEPROM), a read only memory (ROM), a random access memory (RAM), or the like. For example, the storage unit 130 stores an artificial intelligence (AI) model or matching map information 132 which is used to recognize a surrounding situation or environment (particularly, a boundary of a track) of the host vehicle M in addition to programs which are read and executed by a processor. Details of the AI model or the matching map information 132 will be described later.

The recognizer 112 recognizes the surrounding situation or environment of the host vehicle M. An artificial intelligence (AI) model may be used in this recognition. For example, a deep neural network such as an encoder, a decoder, or a transformer may be employed as the AI model.

For example, the recognizer 112 recognizes an object near the host vehicle M on the basis of information input from the camera 10, the radar device 12, and the LIDAR 14 via the object recognition device 16. Examples of the object recognized by the recognizer 112 include a bicycle, a motorbike, a four-wheel vehicle, a pedestrian, a road marking, a road marker, a road marking line, a utility pole, a guardrail, and a fallen object.

The recognizer 112 recognizes states such as a position, a speed, and an acceleration of an object. For example, a position of an object is recognized as a position in a relative coordinate system (that is, a relative position with respect to the host vehicle M) with an origin set to a representative point (such as the center of gravity or the center of a drive shaft) of the host vehicle M and is used for control. A position of an object may be expressed as a representative point such as the center of gravity or a corner of the object or may be expressed as an area. A "state" of an object may include an acceleration or a jerk of the object or a "moving state" (for example, whether lane change is being performed or whether lane change is going to be performed) thereof.

The recognizer 112 recognizes, for example, a lane (hereinafter referred to as a traveling lane) in which the host vehicle M is traveling or a neighboring lane adjacent to the traveling lane. For example, the recognizer 112 recognizes the traveling lane, a neighboring lane, or the like by comparing a pattern of road marking lines (for example, a layout of a solid line and a dotted line) acquired from the second map information 62 with a pattern of road marking lines near the host vehicle M recognized from an image captured by the camera 10.

The recognizer 112 may recognize a lane such as the traveling lane or a neighboring lane by recognizing a track boundary (a road boundary) in addition to the road marking line. The traveling lane boundary includes road marking lines, edges of roadsides, curbstones, median strips, and guard rails. The traveling lane boundary may include a marker or an object indicating a boundary between a roadway and a walkway. **In** this recognition, the position of the host vehicle M acquired from the navigation device 50 or a process result from the INS may be considered. The recognizer 112 may recognize a stop line, an obstacle, a red signal, a toll gate, and other road events.

The recognizer 112 recognizes a relative position or a relative direction of the host vehicle M with respect to the traveling lane at the time of recognition of the traveling lane. The recognizer 112 may recognize, for example, a separation of a reference point of the host vehicle M from the lane center and an angle of the traveling direction of the host vehicle M with respect to a line formed by connecting the lane centers as the relative position and the relative direction of the host vehicle M with respect to the traveling lane. Instead, the recognizer 112 may recognize a position of a reference point of the host vehicle M with respect to one side line of the traveling lane (a road marking line or a road boundary) or the like as the relative position of the host vehicle M with respect to the traveling lane.

An object recognized by the recognizer 112 includes various markers present in a predetermined area. In the predetermined area, a plurality of tracks (routes) of which types are different such as a U-turn lane and a straight lane are present together.

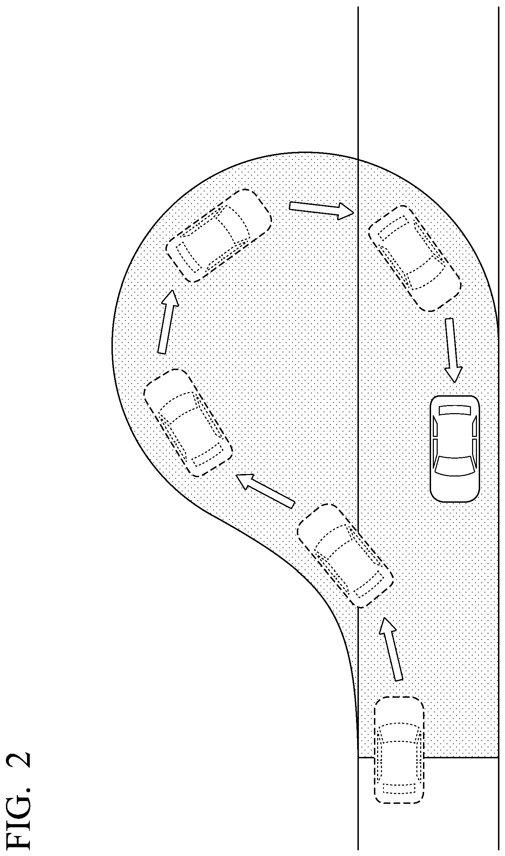

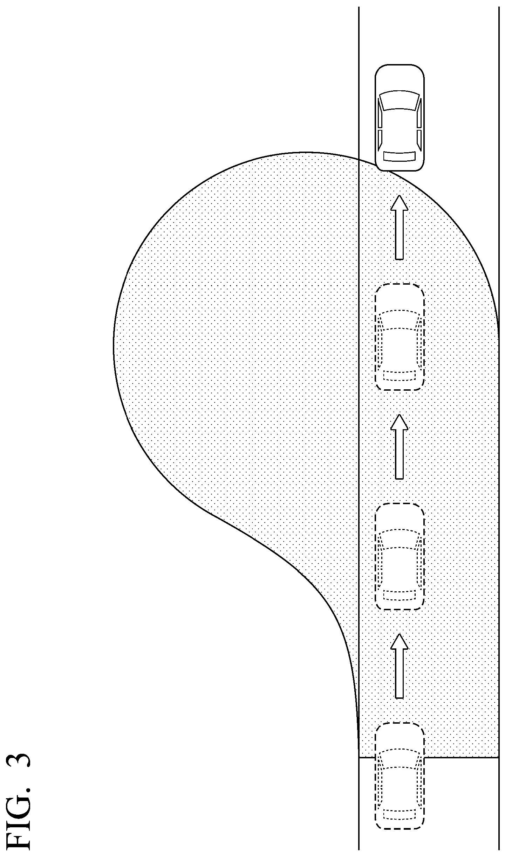

FIGS. 2 and 3 are diagrams illustrating an example of the predetermined area. As illustrated in the drawings, a U-turn lane is formed in the middle of a straight lane in the predetermined area. A vehicle arriving at the predetermined area may U-turn in the predetermined area or may travel straightly.

In such a predetermined area, a road surface of one or more tracks out of a plurality of tracks may be painted in a predetermined color (for example, blue or red) under the permission of an authority managing the road such as the police or the local government. In the illustrated example, a road surface of the U-turn lane is colored by paint.

When a road surface is colored by painting, it may be difficult to recognize a traveling lane boundary, or recognition accuracy of a traveling lane boundary may decrease. That is, the predetermined area can also be said to be an area in which it is difficult to recognize a traveling lane boundary or recognition accuracy of a traveling lane boundary decreases.

In the predetermined area in which there are a plurality of tracks, as described above, an amount of movement in a left or right turn direction or a rotating direction is likely to increase, an estimated position of a vehicle may depart greatly from an actual position due to nonlinear characteristics (slippage) of rolling of tires and thus the vehicle may depart from a track.

Therefore, in the present embodiment, a technique of map matching is used for the host vehicle to travel autonomously without departing from a target track in the predetermined area. Accordingly, the predetermined area is hereinafter particularly referred to as a "map-matching area."

In the map-matching area (that is, the predetermined area), some markers are installed for map matching. The markers may be painted on a road surface as a two-dimensional road marking or may be a three-dimensional road marking such as a signboard, a delineator, or a lane separator.

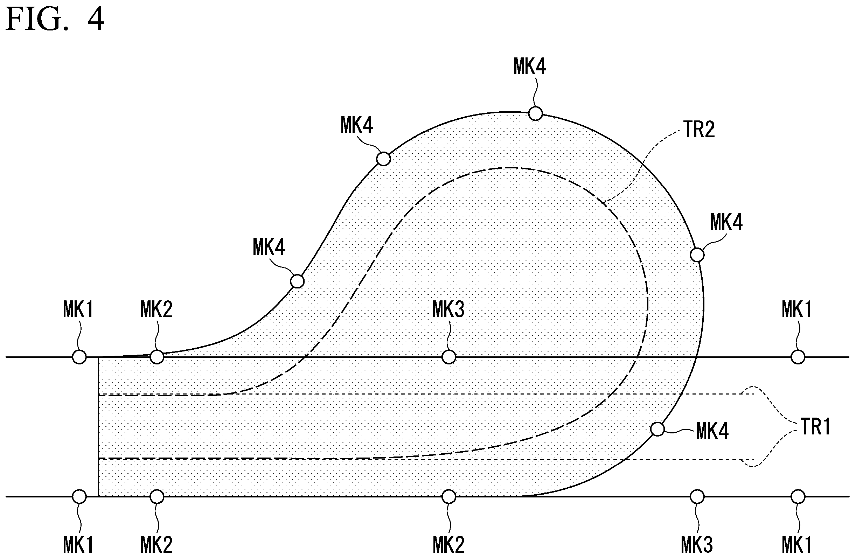

FIG. 4 is a diagram illustrating an example of markers installed in a map-matching area. For example, map-matching area markers MK1, shared markers MK2, route A-only markers MK3, and route B-only markers MK4 are installed in the map-matching area.

The map-matching area markers MK1 are installed in an entrance or an exit of the map-matching area. The map-matching area markers MK1 are markers which are used to switch from automated traveling based on map matching to automated traveling based on track recognition or to switch from automated traveling based on track recognition to automated traveling based on map matching. The map-matching area markers MK1 are an example of a "fourth marker."

The shared markers MK2 are markers which are used both for automated traveling along route A and automated traveling along route B. For example, route A may be a straight lane, and route B may be a U-turn lane. The shared markers MK2 are installed at positions at which track boundaries of route A and route B overlap (that is, positions at which a track boundary of route A and a track boundary of route B match). The shared markers MK2 are an example of a "third marker."

The route A-only markers MK3 are markers which are used only to travel autonomously along route A. The route A-only markers MK3 are installed in the track boundary of route A. The route A-only markers MK3 are an example of a "first marker."

The route B-only markers MK4 are markers which are used only to travel autonomously along route B. The route B-only markers MK4 are installed in the track boundary of route B. The route B-only markers MK4 are an example of a "second marker."

The recognizer 112 recognizes the map-matching area markers MK1, the shared markers MK2, the route A-only markers MK3, and the route B-only markers MK4 as objects present near the host vehicle M.

The route A-only markers MK3 out of the map-matching area markers MK1, the shared markers MK2, the route A-only markers MK3, and the route B-only markers MK4 will be representatively described below. In the following description, the same as applied to the route A-only markers MK3 can also be applied to all the other markers.

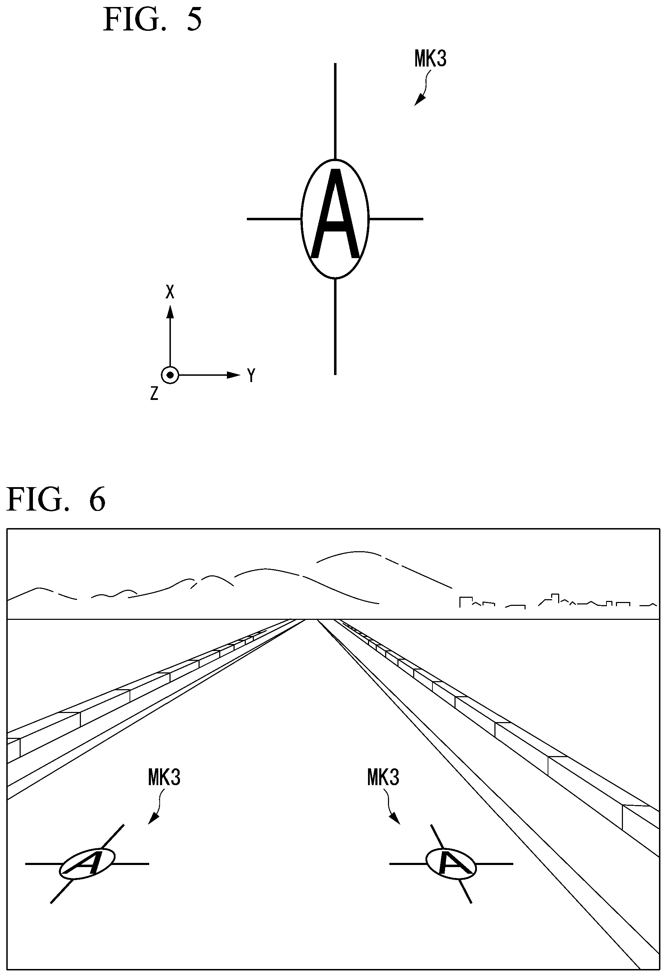

FIG. 5 is a diagram illustrating an example of a route A-only marker MK3. In the following description, an X direction in a three-dimensional space is defined as an extending direction of a road surface (a vehicle traveling direction), a Y direction is defined as a width direction of the road surface, and a Z direction is defined as a vertical direction perpendicular to the road surface.

For example, the route A-only marker MK3 may be painted on a road surface as a two-dimensional road marking. In this case, the route A-only marker MK3 may be painted on the road surface to extend in the extending direction of the road surface (the X direction in the drawing) rather than in the width direction (the Y direction) of the road surface. More specifically, when the route A-only marker MK3 is a circular mark, the route A-only marker MK3 is painted on the road surface as an elliptical marker in which a minor axis is parallel to the Y direction and a major axis is parallel to the X direction.

FIG. 6 is a diagram illustrating an example of an image in front of the host vehicle M captured by the camera 10. When the route A-only marker MK3 is painted on a road surface to extend in the extending direction of the road surface (the X direction in the drawing) rather than in the width direction (the Y direction) of the road surface as described above, the route A-only marker MK3 with a shape in which the scales in the width direction of the road surface (the Y direction) and the extending direction of the road surface (the X direction) are substantially the same can be recognized from the camera 10 due to an optical illusion. That is, it is possible to accurately recognize the route A-only markers MK3 painted on the road surface.

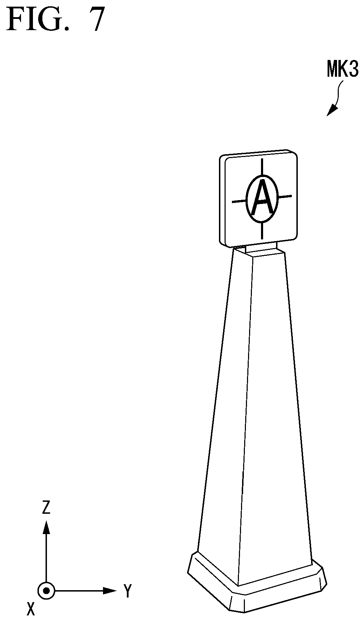

FIG. 7 is a diagram illustrating another example of the route A-only marker MK3. The route A-only marker MK3 is not a two-dimensional road marking, but may be, for example, a three-dimensional road sign or a facility thereof.

Description will be continued with reference back to FIG. 1. The generator 114 generates a future target trajectory TR along which the host vehicle M is to travel autonomously (regardless of a driver's operation). The target trajectory TR includes, for example, a position element for defining the future position of the host vehicle M and a speed element for defining the future speed of the host vehicle M.

For example, the generator 114 determines a plurality of points (trajectory points) at which the host vehicle M is to arrive as position elements of the target trajectory TR. The trajectory points are points at which the host vehicle M is to arrive every predetermined traveling distance (for example, about several [m]). The predetermined traveling distance may be calculated, for example, using a distance along a route when a vehicle travels along the route.

The generator 114 determines a target speed v and a target acceleration α at every predetermined sampling time (for example, below the decimal point [sec]) are generated as a part of the target trajectory as speed elements of the target trajectory TR. The trajectory points may be positions at which the host vehicle M is to arrive at sampling times for each predetermined sampling time. In this case, information of the target speed v or the target acceleration α is expressed by the sampling time and intervals between the trajectory points.

For example, when a track boundary is recognized by the recognizer 112, the generator 114 generates a target trajectory TR for causing the host vehicle M to travel autonomously along a recommended lane determined by the recommended lane determiner 61 in principle in the recognized track boundary. At this time, the generator 114 may generate the target trajectory TR such that the host vehicle M can cope with the surrounding situation at the time of traveling autonomously in the recommended lane. Specifically, the generator 114 may generate the target trajectory TR such that the host vehicle M can carry out various aspects such as constant-speed traveling, following traveling, lane change, branching, merging, overtake, and avoidance. In the following description, the target trajectory TR which is generated when a track boundary has been recognized is referred to as a "third target trajectory TR3."

When a track boundary is not recognized and various markers are recognized by the recognizer 112, the generator 114 performs map matching on the basis of the recognized various markers and the matching map information 132 and generates a target trajectory TR which is suitable for any one of route A and route B.

The matching map information 132 includes at least route A and route B which are present in a map-matching area and also includes positions at which markers are installed and types of the markers.

For example, when the host vehicle travels autonomously along route A (for example, a straight lane) through map matching, the generator 114 compares (matches) the shared markers MK2 included in the matching map information 132 and the recognized shared markers MK2 and compares (matches) the route A-only markers MK3 included in the matching map information 132 and the recognized route A-only markers MK3.

For example, various techniques such as visual simultaneous localization and mapping (VSLAM), empirical map matching, a sequential type least square method, and extremum seeking may be employed as map matching.

When matching of the shared markers MK2 and the route A-only markers MK3 is performed, the generator 114 reads a target trajectory TR1 which is preset for the shared markers MK2 and the route A-only markers MK3 on a map from the map. The target trajectory TR1 may be set to, for example, a position which is separated about several [m] from the shared markers MK2 and the route A-only markers MK3. The generator 114 outputs the target trajectory TR1 read from the matching map information 132 to the driving controller 116. In the following description, the target trajectory TR1 read from the matching map information 132 is referred to as a "first target trajectory TR1."

Similarly, for example, when the host vehicle travels autonomously along route B (for example, a U-tur lane) through map matching, the generator 114 compares (matches) the shared markers MK2 included in the matching map information 132 and the recognized shared markers MK2 and compares (matches) the route B-only markers MK4 included in the matching map information 132 and the recognized route B-only markers MK4.

When matching of the shared markers MK2 and the route B-only markers MK4 is performed, the generator 114 reads a target trajectory TR2 which is preset for the shared markers MK2 and the route B-only markers MK4 on a map from the map. Similarly to the target trajectory TR1, the target trajectory TR2 may be set to, for example, a position which is separated about several [m] from the shared markers MK2 and the route B-only markers MK4. The generator 114 outputs the target trajectory TR2 read from the matching map information 132 to the driving controller 116. In the following description, the target trajectory TR2 read from the matching map information 132 is referred to as a "second target trajectory TR2."

The driving controller 116 controls the travel driving force output device 200, the brake device 210, and the steering device 220 such that the host vehicle M travels along the target trajectory TR generated by the generator 114 as scheduled.

The driving controller 116 acquires the target trajectory TR from the generator 114 and stores the acquired target trajectory TR in a memory of the storage unit 130.

The driving controller 116 controls one or both of the travel driving force output device 200 and the brake device 210 on the basis of the speed elements (for example, a target speed v or a target acceleration α) included in the target trajectory TR stored in the memory.

The driving controller 116 controls the steering device 220 on the basis of the position elements (for example, a curvature κ or a steering shift u according to positions of the trajectory points of the target trajectory) included in the target trajectory stored in the memory.

Speed control and steering control are realized, for example, by combining feedforward control and feedback control. For example, the driving controller 116 performs a combination of feedforward control based on a road curvature in front of the host vehicle M and feedback control based on a separation from the target trajectory TR.

The travel driving force output device 200 outputs a travel driving force (a torque) for allowing the host vehicle M to travel to driving wheels. The travel driving force output device 200 includes, for example, a combination of an internal combustion engine, an electric motor, and a transmission and a power electronic control unit (ECU) that controls these constituents. The power ECU controls these constituents on the basis of information input from the driving controller 116 or information input form the driving operator 80.

The brake device 210 includes, for example, a brake caliper, a cylinder that transmits a hydraulic pressure to the brake caliper, an electric motor that generates a hydraulic pressure in the cylinder, and a brake ECU. The brake ECU controls the electric motor on the basis of the information input from the driving controller 116 or the information input from the driving operator 80 such that a brake torque based on a braking operation is output to wheels. The brake device 210 may include a mechanism for transmitting a hydraulic pressure generated by an operation of a brake pedal included in the driving operator 80 to the cylinder via a master cylinder as a backup. The brake device 210 is not limited to the above-mentioned configuration and may be an electronically controlled hydraulic brake device that controls an actuator on the basis of the information input from the driving controller 116 such that the hydraulic pressure of the master cylinder is transmitted to the cylinder.

The steering device 220 includes, for example, a steering ECU and an electric motor. The electric motor changes a direction of turning wheels, for example, by applying a force to a rack-and-pinion mechanism. The steering ECU drives the electric motor on the basis of the information input from the driving controller 116 or the information input from the driving operator 80 to change the direction of the turning wheels.

### [Process flow]

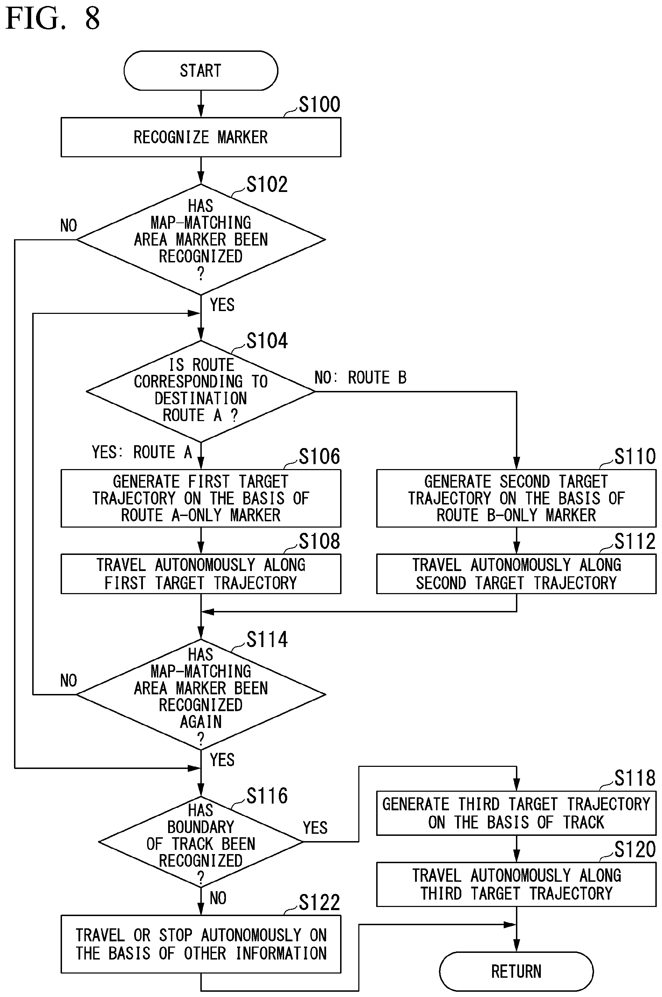

A flow of a series of processes that are performed by the automated driving control device 100 according to the present embodiment will be described below in conjunction with a flowchart. FIG. 8 is a flowchart illustrating an example of a flow of a series of processes that are performed by the automated driving control device 100 according to the present embodiment. The processes of the flowchart may be performed, for example, periodically in a predetermined period.

First, the recognizer 112 starts recognition of the aforementioned markers as an object which is present on a road on which the host vehicle M is traveling (Step S100).

Then, the generator 114 determines whether a map-matching area marker MK1 has been recognized by the recognizer 112 (Step S102).

For example, when the host vehicle M has not entered the map-matching area and a map-matching area marker MK1 has been first recognized, it is determined that the host vehicle M has reached an entrance of the map-matching area or the vicinity thereof.

When the map-matching area marker MK1 has been recognized by the recognizer 112 (that is, when the host vehicle M has reached the entrance of the map-matching area or the vicinity thereof), the generator 114 determines whether a route corresponding to a destination is route A (Step S102).

The destination mentioned herein may be, for example, a destination that is input to the navigation device 50 by a user. For example, in the situation illustrated in FIGS. 2 and 3, route A which is a straight lane is selected as the route corresponding to the destination when the destination is present in front of the host vehicle M, and route B which is a U-turn lane is selected as the route corresponding to the destination when the destination is present behind the host vehicle M.

When the route corresponding to the destination is route A, the generator 114 generates the first target trajectory TR1 which is a target trajectory only for route A on the basis of the route A-only markers MK3 (Step S106).

Specifically, the generator 114 compares (matches) the shared markers MK2 and the route A-only markers MK3 included in the matching map information 132 with the recognized shared markers MK2 and the recognized route A-only markers MK3 and reads the target trajectory TR1 which is preset for the shared markers MK2 and the route A-only markers MK3 in the matching map information 132 from the matching map information 132. Then, the generator 114 sets the target trajectory TR1 read from the matching map information 132 as the first target trajectory TR1.

Then, the driving controller 116 controls the travel driving force output device 200, the brake device 210, and the steering device 220 on the basis of the first target trajectory TR1 (Step S108). That is, the driving controller 116 performs automated driving on the basis of the first target trajectory TR1. Accordingly, the host vehicle M travels autonomously along route A. The automated driving based on the first target trajectory TR1 is an example of "first automated driving."

When it is determined in the determination process of S104 that the route corresponding to the destination is route B, the generator 114 generates the second target trajectory TR2 which is a target trajectory only for route B on the basis of the route B-only markers MK4 (Step S110).

Specifically, the generator 114 compares (matches) the shared markers MK2 and the route B-only markers MK4 included in the matching map information 132 with the recognized shared markers MK2 and the recognized route B-only markers MK4 and reads the target trajectory TR2 which is preset for the shared markers MK2 and the route B-only markers MK4 in the matching map information 132 from the matching map information 132. Then, the generator 114 sets the target trajectory TR2 read from the matching map information 132 as the second target trajectory TR2.

Then, the driving controller 116 controls the travel driving force output device 200, the brake device 210, and the steering device 220 on the basis of the second target trajectory TR2 (Step S112). That is, the driving controller 116 performs automated driving on the basis of the second target trajectory TR2. Accordingly, the host vehicle M travels autonomously along route B. The automated driving based on the second target trajectory TR2 is an example of "first automated driving."

Then, the generator 114 determines whether a map-matching area marker MK1 has been recognized again by the recognizer 112 (Step S114).

For example, when the map-matching area marker MK1 has been recognized again after the host vehicle has entered the map-matching area, it is determined that the host vehicle M has reached an exit of the map-matching area or the vicinity thereof.

When the map-matching area marker MK1 has not been recognized again by the recognizer 112 (that is, when the host vehicle M has not reached an exit of the map-matching area or the vicinity thereof), the generator 114 returns the process flow to S104. Accordingly, automated driving based on map matching is continued until the host vehicle M has reached the exit of the map-matching area.

On the other hand, (i) when it is determined in the determination process of S102 that the map-matching area marker MK1 has not been recognized and the host vehicle M has not reached the entrance of the map-matching area or the vicinity thereof or (ii) when it is determined in the determination process of S114 that the map-matching area marker MK1 has been recognized again and the host vehicle M has reached the exit of the map-matching area or the vicinity thereof, the generator 114 determines whether a track boundary has been recognized by the recognizer 112 (Step S116). That is, when the host vehicle M is located outside of the map-matching area, the generator 114 determines whether a track boundary has been recognized by the recognizer 112.

When a track boundary outside of the map-matching area has been recognized, the generator 114 generates a third target trajectory TR3 along which the host vehicle M is to travel autonomously in the recognized track boundary (Step S118).

For example, when the host vehicle M has reached the exit of the map-matching area and a track boundary in front of the exit of the map-matching area has been recognized by the recognizer 112, the generator 114 may generate the third target trajectory TR3 on the basis of the track boundary in front of the exit of the map-matching area.

Then, the driving controller 116 controls the travel driving force output device 200, the brake device 210, and the steering device 220 on the basis of the third target trajectory TR3 (Step S120). That is, the driving controller 116 performs automated driving on the basis of the third target trajectory TR3. Accordingly, the host vehicle M travels autonomously in a track outside of the map-matching area. The automated driving based on the third target trajectory TR3 is an example of "second automated driving."

On the other hand, when a track boundary outside of the map-matching area has not been recognized, the generator 114 may generate the third target trajectory TR3 using other information on the outside of the track boundary or generate a fourth target trajectory TR4 for decelerating and stopping the host vehicle M (Step S122).

For example, when the host vehicle M reaches the exit of the map-matching area, it is expected for the recognizer 112 to recognize a track boundary in front of the exit of the map-matching area. However, a road marking line, an edge of a roadside, a curbstone, a median strip, a guardrail, or the like may not be recognized due to various situations, and thus a track boundary may not be recognized or recognition accuracy thereof may decrease.

When such a track boundary has not been recognized or when recognition accuracy of a track boundary decreases, the generator 114 may generate the third target trajectory TR3 along which the host vehicle M is to travel autonomously by using the position (the GNSS coordinate) of the host vehicle M identified by the GNSS receiver 51 or using the process result of the INS. When any information is not able to be used, the generator 114 may generate the fourth target trajectory TR4 for decelerating and stopping the host vehicle M. In this way, the process flow of the flowchart ends.

According to the aforementioned embodiment, the automated driving control device 100 includes the recognizer 112 configured to recognize an object which is present near the host vehicle M using at least the camera 10, the generator 114 configured to generate a target trajectory TR along which the host vehicle M is to travel on the basis of the recognized object, and the driving controller 116 configured to perform automated driving on the basis of the target trajectory TR. The automated driving is to automatically control at least one or both of a speed and steering of the host vehicle M as described above.

The recognizer 112 recognizes a map-matching area marker MK1 (an example of the "fourth marker"), a shared marker MK2 (an example of a "third marker"), a route A-only marker MK3 (an example of a "first marker"), and a route B-only marker MK4 (an example of a "second marker") which are two-dimensional or three-dimensional markers.

The recognizer 112 recognizes a track boundary. The track boundary includes a road marking line, a road shoulder, a curbstone, a median strip, or a guardrail. The track boundary may include a marker or an object indicating a boundary between a roadway and a walkway.

The driving controller 116 switches the automated driving to be performed between automated driving based on various markers (an example of "first automated driving") and automated driving based on a track boundary (an example of "second automated driving").

The following processes are performed as the automated driving based on various markers. First, when a route to a destination is route A (an example of a "first route"), the generator 114 generates a first target trajectory TR1 which is a target trajectory TR at the time of traveling along route A on the basis of a comparison result (a matching result) between the recognized route A-only marker MK3 and the route A-only marker MK3 included in the matching map information 132.

Similarly, when the route to a destination is route B (an example of a "second route"), the generator 114 generates a second target trajectory TR2 which is a target trajectory TR at the time of traveling along route B on the basis of a comparison result (a matching result) between the recognized route B-only marker MK4 and the route B-only marker MK4 included in the matching map information 132.

When the first target trajectory TR1 is generated, the driving controller 116 causes the host vehicle M to travel autonomously along route A by performing automated driving based on the first target trajectory TR1.

When the second target trajectory TR2 is generated, the driving controller 116 causes the host vehicle M to travel autonomously along route B by performing automated driving based on the second target trajectory TR2.

The following processes are performed as the automated driving based on a track boundary. First, the generator 114 generates a third target trajectory TR3 along which the host vehicle M is to travel autonomously in the recognized track boundary.

When the third target trajectory TR3 is generated, the driving controller 116 causes the host vehicle M to travel autonomously along the track by performing automated driving based on the third target trajectory TR3.

By employing this configuration, it is possible to perform automated traveling without departing from a target track even in a situation in which the host vehicle M has to move greatly in a left or right turn direction or a rotating direction in an area in which the track is less likely to be recognized.

While the present invention has been described in conjunction with an embodiment, the present invention is not limited to the embodiment, and various modifications and replacements can be added thereto without departing from the gist of the present invention.

### EXPLANATION OF REFERENCES

1 Mobile object control system
10 Camera
12 Radar device
14 Finder
16 Object recognition device
20 Communication device
30 HMI
40 Vehicle sensor
50 Navigation device
60 MPU
80 Driving operator
90 Driver monitoring camera
100 Automated driving control device
110 Processor
112 Recognizer
114 Generator
116 Driving controller
130 Storage unit
M Host vehicle

## Claims

1. A mobile object control device comprising:
a recognizer configured to recognize an object which is present near a mobile object using at least a camera; and
a driving controller configured to perform automated driving for autonomously controlling at least one of a speed and steering of the mobile object on the basis of the recognized object,
wherein the recognizer recognizes a two-dimensional or three-dimensional marker and a boundary of a track along which the mobile object moves, and
wherein the driving controller switches the automated driving to be performed between first automated driving which is the automated driving based on the marker and second automated driving which is the automated driving based on the boundary.

2. The mobile object control device according to claim 1, wherein the driving controller switches the automated driving to the first automated driving when the marker is recognized and switches the automated driving to the second automated driving when the marker is not recognized or when the marker is recognized again after having switching the automated driving to the first automated driving.

3. The mobile object control device according to claim 1 or 2, wherein the recognizer recognizes a first marker and a second marker other than the first marker, and
wherein the driving controller switches the automated driving to be performed between the first automated driving based on the first marker and the first automated driving based on the second marker.

4. The mobile object control device according to claim 3, further comprising a generator configured to generate a target trajectory along which the mobile object is to travel on the basis of the marker,
wherein the generator generates a first target trajectory which is the target trajectory at the time of traveling along a first route on the basis of a result of comparison between the recognized first marker and the first marker included in map information when a route to a destination is the first route,
wherein the generator generates a second target trajectory which is the target trajectory at the time of traveling along a second route on the basis of a result of comparison between the recognized second marker and the second marker included in the map information when the route to the destination is the second route,
wherein the driving controller causes the mobile object to travel along the first route by performing the first automated driving on the basis of the first target trajectory, and
wherein the driving controller causes the mobile object to travel along the second route by performing the first automated driving on the basis of the second target trajectory.

5. The mobile object control device according to claim 4, wherein the first marker and the second marker are installed in a predetermined area in which the first route and the second route are present together.

6. The mobile object control device according to claim 5, wherein a third marker which is shared by both the first target trajectory and the second target trajectory are additionally installed in the predetermined area,
wherein the generator generates the first target trajectory on the basis of a result of comparison between the recognized first marker and the recognized third marker and the first marker and the third marker included in the map information when a route to a destination is the first route, and
wherein the generator generates the second target trajectory on the basis of a result of comparison between the recognized second marker and the recognized third marker and the second marker and the third marker included in the map information when the route to the destination is the second route.

7. The mobile object control device according to claim 5 or claim 6, wherein a fourth marker which is the two-dimensional or three-dimensional marker is installed in an entrance of the predetermined area,
wherein the recognizer additionally recognizes the fourth marker, and
wherein the generator starts generating the first target trajectory or the second target trajectory when the fourth marker is recognized.

8. The mobile object control device according to claim 7, wherein the fourth marker is installed in an exit of the predetermined area,
wherein the recognizer recognizes the boundary of the track in front of a position at which the fourth marker has been recognized again when the fourth marker has been recognized again,
wherein the generator generates a third target trajectory which is the target trajectory at the time of traveling along the track on the basis of the recognized boundary, and
wherein the driving controller causes the mobile object to travel along the track by performing the second automated driving on the basis of the third target trajectory.

9. The mobile object control device according to claim 8, wherein the generator generates a fourth target trajectory for decelerating and stopping the mobile object when the boundary of the track is not recognized in front of the position at which the fourth marker has been recognized again, and
wherein the driving controller stops the mobile object by automatically controlling at least one of the speed and the steering of the mobile object on the basis of the fourth target trajectory.

10. The mobile object control device according to any one of claims 3 to 9, wherein at least one of the first marker and the second marker is painted on a road surface using an optical illusion as the two-dimensional marker on the road surface.

11. A mobile object control method using a computer mounted in a mobile object in which at least a camera is installed, the mobile object control method comprising:
recognizing an object which is present near a mobile object using the camera;
performing automated driving for autonomously controlling at least one of a speed and steering of the mobile object on the basis of the recognized object;
recognizing a two-dimensional or three-dimensional marker and a boundary of a track along which the mobile object moves; and
switching the automated driving to be performed between first automated driving which is the automated driving based on the marker and second automated driving which is the automated driving based on the boundary.

12. A program for causing computer mounted in a mobile object in which at least a camera is installed to perform:
recognizing an object which is present near a mobile object using the camera;
performing automated driving for autonomously controlling at least one of a speed and steering of the mobile object on the basis of the recognized object;
recognizing a two-dimensional or three-dimensional marker and a boundary of a track along which the mobile object moves; and
switching the automated driving to be performed between first automated driving which is the automated driving based on the marker and second automated driving which is the automated driving based on the boundary.
